# EUROPÄISCHE PATENTSCHRIFT

(11) **EP 2 386 369 B1**
(45) Veröffentlichungstag und Bekanntmachung des Hinweises auf die Patenterteilung: **14.11.2018**
(21) Anmeldenummer: 11002960.0
(22) Anmeldetag: 08.04.2011
(51) Int. Cl.: B22F 1/00, B22F 7/00, C04B 38/00, B29C 33/38, D21G 7/00, F16C 29/02

(54) **VERFAHREN ZUR HERSTELLUNG VON VERBUNDKÖRPERN, VERBUNDKÖRPER, SOWIE IHRE VERWENDUNGEN**
METHOD FOR MANUFACTURING COMPOUND BODIES, COMPOSITE BODIES AND THEIR USES
PROCÉDÉ DE FABRICATION DE CORPS COMPOSITES, CORPS COMPOSITES ET LEURS UTILISATIONS

(30) Priorität: 16.04.2010 DE 102010015558
(43) Veröffentlichungstag der Anmeldung: 16.11.2011
(73) Patentinhaber: Prospective Concepts AG, 8953 Dietikon (CH)
(72) Erfinder: Stoll, Kurt, Dr., 73732 Esslingen (DE); Hirzel, Theodor, 8967 Widen (CH)
(74) Vertreter: Patentanwälte Magenbauer & Kollegen Partnerschaft mbB

(56) Entgegenhaltungen:
- EP-A1- 1 547 752
- WO-A1-2005/053818
- DE-A1- 10 002 662
- US-A- 3 755 213

## Beschreibung

Die Erfindung betrifft ein Verfahren zur Herstellung von Verbundkörpern.

Derartig hergestellte Verbundkörper sind beispielsweise in der EP 0 789 644 B1 beschrieben. Der Verbundkörper besteht aus fluidundurchlässigen Abschlussmitteln, beispielsweise in Form eines offenen Behälters oder einer unporösen, fluidundurchlässigen Abschlussschicht, die mit einem fluiddurchlässigen Formkörper verbunden sind. Der Formkörper besteht aus einer feinerporösen Oberflächenschicht und einer gröberporösen Grundschicht. Bei der Herstellung des Verbundkörpers wird zunächst zwischen zwei Formteile, die zusammen einen Hohlraum bilden, der der zu erstellenden feinerporösen Oberflächenschicht entspricht, eine Mischung aus nicht ausgehärtetem Kunststoff und Metallgranulat, beispielsweise Aluminiumgranulat, gebracht. Die mit der Mischung in Kontakt tretenden Oberflächen der Formteile sind derart vorbereitet, dass die Mischung nicht an ihnen haftet. Zwischen den Formteilen wird die Mischung durch Vibrieren und/oder Wirkung eines Pressdruckes verdichtet. Bei der Herstellung eines flächigen Verbundkörpers wird lediglich ein Formteil verwendet, dessen ebene Innenbodenfläche mit der Mischung aus nicht ausgehärtetem Kunststoff und Metallgranulat für die zu erstellende Oberflächenschicht beladen wird. Auch hier wird die Mischung in der Form vibriert und/oder mit einem Stempel gepresst.

Nach dem Verdichten der Oberflächenschicht wird auf diese eine zweite Mischung aus Metallgranulat und nicht ausgehärtetem Kunststoff aufgebracht, wobei die Partikel dieses Metallgranulats deutlich größer sind als die Partikel des ersten Metallgranulats für die Oberflächenschicht. Auch hier findet wieder ein Verdichten dieser grobporösen Grundschicht statt, in dem beispielsweise mit einem weiteren Stempel verpresst wird. Danach wird der entstandene Formkörper vom Formteil entfernt und mit den fluidundurchlässigen Abschlussmitteln des offenen Behälters verbunden. Alternativ wird auf den im Formteil befindlichen Formkörper noch die porenlose Abschlussschicht mittels eines Stempels gepresst.

Bei der Herstellung derartiger Verbundkörper ist es also notwendig, zum Erhalt des Formkörpers ein Formteil einzusetzen und die im Formteil befindlichen Schichten zu verdichten, beispielsweise mechanisch mittels eines Stempels. Der Herstellungsprozess ist daher relativ aufwändig und somit kostenintensiv.

Aus der EP 0 486 421 B1 ist ein Verfahren zur Herstellung von Formkörpern bekannt, die als Fluid-Leitungssysteme verwendet werden. Bei der Herstellung dieser Formkörper wird zunächst Metallpulver mit Hilfe eines Bindemittels durch Kneten zu Metallpartikel-Clustern geformt. Die Clustergröße beträgt hierbei mehrere Partikel der eingesetzten Metallpartikel des Metallpulvers. Das entstandene Clustergranulat wird dann mit einem Bindemittel gemischt und anschließend gepresst bevor es dann gesintert wird. Die Härtung der Mischung aus Clustergranulat und Bindemittel erfolgt beim Sinterprozess durch Polymerisation, wobei ein relativ hoher Druck angelegt werden muss. Der ausgehärtete Formkörper weist an seiner Oberfläche eine Vielzahl von unregelmäßig geformten Öffnungen oder Poren auf, wodurch bei Hindurchleitung von Fluid ein fein verteilter Fluidaustritt praktisch als Kontinuum über die gesamte Oberfläche erzielt werden kann. Der hierdurch erhaltene Formkörper wird als Block hergestellt und muss daher anschließend weiterverarbeitet werden. Soll ein derartiger Formkörper beispielsweise als Begasungselement zur Wasserbelüftung eingesetzt werden, so ist es notwendig, außer der Luftaustrittsfläche alle anderen Oberflächen des Formkörperblocks zu bearbeiten, d.h. die Poren zu verschließen. Eine derartige Nachbearbeitung ist ebenfalls sehr zeitaufwändig und somit kostenintensiv.

Die WO 2005/053818 A1 beschreibt ein Verfahren zur Herstellung poröser Formkörper, bei denen unter anderem nicht-hohle Glaskügelchen mit feinkörnigen Kunststoff-Ausgangsmaterial für ein Epoxid-Harz vermischt und anschließend einem Brennprozess unterzogen werden.

Die DE 100 02 662 A1 beschreibt ein Schalungselement aus mineralischem Leichtstoff, wobei das Schalungselement dadurch hergestellt wird, dass eine Mischung aus Hohlkugelaluminiumsilikat und einem pulverförmigen Epoxid- und/oder Polyesterharz miteinander gemischt und dann bei rund 200°C einem Brennprozess ausgesetzt wird. Es ist ferner auch erwähnt, dass die Mischung in Formen gefüllt und dann dem Brennprozess unterzogen werden kann.

Die EP 1 547 752 A1 beschreibt eine Vorrichtung zum Thermoformen, mit einem gasdurchlässigen Träger und einen auf dem Träger angeordneten porösen Einsatz, der Matrixpartikel und ein Bindemittel aufweist. Das Bindemittel kann durch feste teilchenförmige thermoplastische Polymere gebildet sein.

Die US 3 755 213 A beschreibt die Herstellung verschiedener Schichten einer Spritzgussform, die beispielsweise für das Kunststoffspritzgießen eingesetzt werden können. Es ist ein weibliches und ein männliches Formstück vorgesehen, die relativ zueinander beweglich sind und zwischen denen ein Hohlraum ausgebildet ist, in dem dann plastifiziertes Material, beispielsweise Kunststoff, einströmt und dort zum Spritzgussteil geformt wird.

Aufgabe der Erfindung ist es daher, ein Verfahren zur Herstellung von Verbundkörpern der eingangs erwähnten Art bereitzustellen, mit dem Verbundkörper auf einfache Weise und kostengünstig herstellbar sind und der Bedarf einer Nachbearbeitung stark reduziert ist.

Diese Aufgabe wird durch ein Verfahren mit den Merkmalen des unabhängigen Anspruchs 1 gelöst. Weiterbildungen der Erfindung sind in den Unteransprüchen dargestellt.

Erfindungsgemäß wird ein Verfahren bereitgestellt zur Herstellung von Verbundkörpern aus dauerhaft miteinander verbundenem, steifem, fluidundurchlässigem Trägerkörper und einem harten, porösen und mit einer Vielzahl von Kanälen zur Durchleitung von Fluiden versehenen Formkörper, mit folgenden Schritten:
- Bereitstellen von Salzpulver und/oder Metallpulver und Bindemittelpulver sowie eines steifen, fluidundurchlässigen Trägerkörpers,
- Mischen des Salzpulvers und/oder Metallpulvers und des Bindemittelpulvers zu einer Pulvermischung in einem Mengenverhältnis von Salzpulver und/oder Metallpulver zu Bindemittelpulver in der Pulvermischung im Bereich von 5 Teilen Salzpulver und/oder Metallpulver zu 1 Teil Bindemittelpulver bis 7 Teile Salzpulver und/oder Metallpulver zu 1 Teil Bindemittelpulver,
- Beladen des Trägerkörpers mit der Pulvermischung
- Temperieren des mit unverpresster Pulvermischung beladenen Trägerkörpers in einem Ofen auf eine Temperatur bei der die Bindemittelpartikel erweichen aber nicht abfließen und Bindemittelbrücken entstehen, die benachbarte Salz- und/oder Metallpartikel miteinander verbinden und anschließend das Bindemittel aushärtet, wodurch ein Verbundkörper aus Trägerkörper und Formkörper entsteht.

Im Vergleich zum vorerwähnten Stand der Technik bildet der Trägerkörper also zugleich das Formteil, in der die Pulvermischung aufgenommen ist, als auch die fluidundurchlässigen Abschlussmittel. Der Trägerkörper wird also mitsamt der Pulvermischung gesintert, gebacken oder in sonstiger Weise temperiert, wie beispielsweise ein Kuchen mit dem Unterschied, dass das Kuchenblech, d.h. der Trägerkörper auch nach dem Backvorgang als fester Bestandteil des Verbundkörpers dranbleibt. Es ist also nicht notwendig, den Formkörper nach dem Aushärten vom Trägerkörper zu entfernen. Da der Trägerkörper dauerhaft und fest mit dem Formkörper verbunden ist, ist es nicht notwendig, die vom Trägerkörper abgedeckten Seite des Formkörpers nachzubearbeiten. Es ist also mindestens eine Seite des Formkörpers durch den Trägerkörper bedeckt, wodurch der Aufwand für die Nachbearbeitung reduziert wird.

Bei einer Weiterbildung der Erfindung handelt es sich bei dem Salzpulver um anorganisches Salzpulver, insbesondere Metallsalzpulver. Prinzipiell wäre es auch möglich, organisches Salzpulver zu verwenden, beispielsweise Acetatpulver. Insbesondere beim Einsatz von Metallsalzpulver entsteht ein ausgehärteter Formkörper, dessen Zerspanbarkeit hervorragend ist. Der Formkörper kann dann an den nicht durch den Trägerkörper abgedeckten Seiten quasi wie Holz verarbeitet werden, beispielsweise mittels Holzbearbeitungswerkzeugen. Bei der maschinellen Bearbeitung kann ohne Kühlflüssigkeit, also trocken, gearbeitet werden, da das Formkörpermaterial bei der maschinellen Bearbeitung nicht warm wird. Bei der Nachbearbeitung des Formkörpers, beispielsweise mittels Schleifen oder Polieren, wird die Porenstruktur an der Oberfläche nicht verschlossen. Die Porenstruktur bleibt also erhalten. Das Formkörpermaterial ist verzugsarm und haptisch sehr angenehm. Es ist ferner antistatisch, nicht brennbar, elektrisch nicht leitend und toxikologisch unbedenklich.

Ebenfalls besonders bevorzugt handelt es sich bei dem Salzpulver um Metallsalzpulver, wobei hier insbesondere anorganisches Metallsalzpulver verwendet wird. Bei den Kationen des Salzpulvers handelt es sich also bevorzugt um Metallionen.

Bei den Anionen des Salzpulvers handelt es sich bevorzugt um Hydroxidionen. Es kann auch ein Aquoxid verwendet werden. Bevorzugt handelt es sich bei dem Metallsalzpulver also um Metallaquoxidpulver, insbesondere Metallhydroxidpulver. Metallhydroxidpulver hat den Vorteil, dass die hiermit hergestellten Formkörper selbstlöschende Eigenschaften aufweisen, d.h. sich bei der Verbrennung zu Wasser zu zersetzen, das dann bei der Löschung eines Brandes als Wasserdampf zur Verfügung steht. Demgemäß lassen sich also aus Metallhydroxidpulver hergestellte Formkörper als Bestandteil der Verbundkörper beim Brandschutz, beispielsweise also Brandschutzverkleidungselemente einsetzen.

Bevorzugt ist das Metallsalzpulver ausgewählt aus der Gruppe bestehend aus Aluminiumsalzpulver, Magnesiumsalzpulver und Siliciumsalzpulver. In besonders bevorzugter Weise wird als Metallsalzpulver Aluminiumhydroxid verwendet.

Im Falle der Verwendung von Metallpulver ist Aluminiumpulver bevorzugt.

Bei einer Weiterbildung der Erfindung wird als Bindemittelpulver ein in Pulverform vorliegendes Harz verwendet. Zweckmäßigerweise handelt es sich hierbei um ein Klebstoffharz.

Es ist möglich, ein Mehrkomponenten-Harzpulver zu verwenden, wobei als eine der Komponenten Epoxidharzpulver vorgesehen ist. In besonders bevorzugter Weise wird ein Harzgemisch aus Epoxidharzpulver und Polyesterharzpulver verwendet.

Bevorzugt liegt das Mengenverhältnis von Salzpulver und/oder Metallpulver zu Bindemittelpulver in der Pulvermischung im Bereich von ca. 6 Teile Salzpulver und/oder Metallpulver zu 1 Teil Bindemittelpulver.

Bei der Erfindung wird die Pulvermischung dem Ofen unverpresst zugeführt. Es ist also nicht notwendig, die Pulvermischung zunächst im Trägerkörper zu verpressen, wie es bei der Herstellung der Verbundkörper aus dem Stand der Technik mit dem mechanischen Verpressen der Mischung mittels eines Stempels der Fall ist. Dadurch kann ein weiterer Prozessschritt eingespart werden.

In besonders bevorzugter Weise wird das Temperieren unter Vakuum durchgeführt.

Die Behandlungstemperatur ist abhängig vom eingesetzten Bindemittelpulver. Es ist notwendig, die Bindemittelpartikel zum Erweichen zu bringen, wodurch Bindemittelbrücken aus Bindemitteln entstehen, die die Salzpartikel bzw. Metallpartikel des Salzpulvers bzw. Metallpulvers zusammenhalten.

Die Behandlungstemperatur liegt bevorzugt bei 130°C.

Zweckmäßigerweise wird vor dem Beladen des Trägerkörpers mit Pulvermischung auf wenigstens eine Trägerkörperoberfläche, die mit der Pulvermischung in Kontakt kommt, Haftmittel zur stoffflüssigen Verbindung zwischen dem Trägerkörper und dem nach dem Aushärten entstandenen Formkörper aufgetragen. Als Haftmittel kann beispielsweise ein Klebemittelharz eingesetzt werden. Durch das Auftragen von Haftmittel, der auch als Haftgrund bezeichnet werden kann, wird der Halt des Formkörpers an dem Trägerkörper nach dem Herstellungsprozess unterstützt.

Es ist möglich, dass der Trägerkörper vor dem Beladen mit der Pulvermischung mit wenigstens einer gegenüber der Pulvermischung grobporöseren Körner-Grundschicht beladen wird. Als Körner-Grundschicht kann beispielsweise ebenfalls eine Pulvermischung aus Salzpulver und/oder Metallpulver und Bindemittelpulver eingesetzt werden, wobei die Salzpartikel und/oder Metallpartikel hier insbesondere deutlich größer sind. Die mittlere Korngröße der Körner in der Körner-Grundschicht ist zweckmäßigerweise größer als die mittlere Partikelgröße der Pulverpartikel in der Pulvermischung.

In besonders bevorzugter Weise wird als Körner-Grundschicht Sand, insbesondere Quarzsand, verwendet. Gegenüber einer grobporöseren Pulvermischung ist dies kostengünstiger.

Die Erfindung umfasst ferner noch einen Verbundkörper, insbesondere hergestellt nach dem Verfahren nach einem der Ansprüche 1 bis 11, mit einem steifen, fluidundurchlässigen Trägerkörper, an dem ein Formkörper angeordnet ist, der mit dem Trägerkörper über Haftmittel dauerhaft verbunden ist, wobei der Formkörper ein mikroporöses Strukturskelett aus Salzund/oder Metallpartikeln aufweist, die über Bindemittelbrücken aus Bindemittel aneinander haften, wobei zwischen den Salzpartikeln und/oder Metallpartikeln eine Vielzahl von Kanälen ausgebildet sind, die über das gesamte Strukturskelett verteilt angeordnet sind und an einer Formkörperoberfläche des Formkörpers in Gestalt von unregelmäßig geformten Öffnungen über die gesamte Formkörperoberfläche verteilt ausmünden.

Die Haftmittel sind von widerhakenartigen Verankerungselementen gebildet, die am Trägerkörper angeordnet sind, beispielsweise einstückig aus diesem herausgebildet und sich in das Material der Formkörpers einkrallen. Bei dieser Variante entsteht also zwischen dem Formkörper und dem Trägerkörper ein Formschluss.

Der Verbundkörper lässt sich beispielsweise als Luft-Gleitlager verwenden. Solche Luft-Gleitlager können beispielsweise zum berührungslosen Transport berührungsempflicher Gegenstände, wie Wafer, optischer Komponenten, beispielsweise Linsen, Spiegel oder dergleichen eingesetzt werden. Als Trägerkörper kann hier beispielsweise ein Alu-Profil verwendet werden, an dem Luftanschlussmittel zur Zuführung von Druckluft angeordnet sind. Dadurch lässt sich ein solches Luft-Gleitlager in einfacher Weise herstellen.

Es ist möglich, einen derartigen Verbundkörper als Schüttgutfördereinrichtung zur Förderung von insbesondere pulverförmigern Schüttgut zu verwenden. Beispielsweise könnte der Verbundkörper als eine Art Schüttgutrutsche ausgestaltet sein, wobei der Trägerkörper einen Teil des Gestells der Schüttgutrutsche bilden würde und die Oberfläche des Formkörpers als Rutschfläche für das Schüttgut ausgestaltet sein kann. Wird der Verbundkörper dann an eine Druckluftquelle angeschlossen, wodurch Druckluft durch den Formkörper hindurch zur Rutschfläche gelangt und dort austritt, wird ein Luftfilm gebildet, der gewährleistet, dass pulverförmiges Schüttgut nicht an der Rutschfläche hängenbleibt, sondern zuverlässig weitertransportiert wird.

Der Verbundkörper kann ferner als Begasungs- und/oder Befeuchtungseinrichtung dienen. Beispielsweise kann der Verbundkörper als Begasungselement zur Wasserbelüftung eingesetzt werden, wobei sich beispielsweise feine und großflächig verteilte Luftbläschen nach Art des "Champagner-Effekts" erzeugen lassen. Anwendungsgebiet wäre hier beispielsweise die Belüftung von Klärbecken und Aquarien. Setzt man den Formkörper als Befeuchtungselement ein, können bei Hindurchleiten von Flüssigkeiten Aerosole erzeugt werden, die beispielsweise in der Klimatechnik zur Luftbefeuchtung verwendet werden können.

Ein weiteres Anwendungsgebiet des Formkörpers ist die Tiefziehtechnik. Der Verbundkörper lässt sich beispielsweise als Tiefziehform verwenden, beispielsweise zum Tiefziehen von Kunststofffolien. Dabei wird eine Kunststofffolie über einen becherförmigen, offenen Hohlraum des Formkörpers positioniert. Über den Trägerkörper wird mittels einer Absaugeinrichtung Luft aus dem Hohlraum abgesaugt. Durch den im Hohlraum entstehenden Unterdruck wird die Folie gegen die Form gezogen und entsprechend deformiert, wobei zusätzlich ein Gegenwerkzeug zum Einsatz kommen kann. Zum Ausstoßen des fertigen tiefgezogenen Gegenstandes wird Druckluft zugeführt, die dann an der Formkörperoberfläche austritt.

Das erfindungsgemäße Herstellungsverfahren ist in der Zeichnung beispielhaft in drei aufeinanderfolgenden Zeichnungsfiguren dargestellt. In der Zeichnung zeigen:
- Figur 1: eine schematische Darstellung eines Trägerkörpers des erfindungsgemäßen Verbundkörpers im unbeladenen Zustand,
- Figur 2: eine schematische Darstellung des Trägerkörpers von Figur 1, wobei die Trägerkörperinnenseiten mit Haftmitteln versehen sind und der Trägerkörper mit einer Körner-Grundschicht beladen ist und
- Figur 3: eine schematische Darstellung des erfindungsgemäßen Verbundkörpers aus Trägerkörper und Formkörper, der nach dem Sintervorgang ausgehärtet ist.

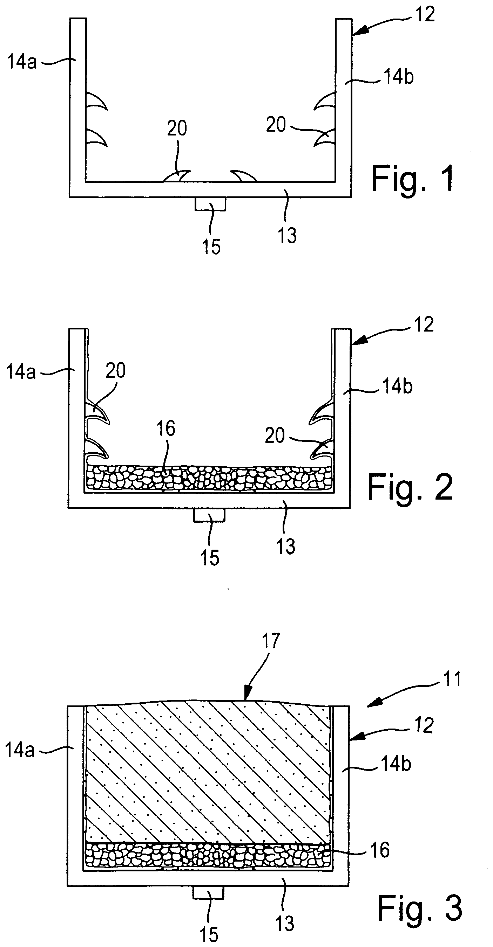

Die Figuren 1 und 3 zeigen in schematischer Weise die verschiedenen Schritte bei der Herstellung des erfindungsgemäßen Verbundkörpers 11. Zunächst wird ein fluidundurchlässiger Trägerkörper 12 bereitgestellt, der beispielhaft in Form eines U-förmigen Alu-Profils dargestellt ist. Das Alu-Profil besitzt demnach einen Boden 13 und zwei einander gegenüberliegende Seitenwände 14a, 14b. Am Boden 13 des Alu-Profils ist ferner ein Fluidanschluss vorgesehen, über den beispielsweise Druckluft oder nicht gasförmiges Fluid zugeführt werden kann. Ferner ist der Fluidanschluss auch dazu geeignet, einen Unterdruck anzulegen. An den Seitenwänden 14a, 14b und am Boden 13 befinden sich ferner widerhakenartige Verankerungselement 20.

Es werden ferner Aluminiumhydroxidpulver mit einer Korngröße im Bereich von 10 bis 160*µ*m (beispielsweise Alfrimat 80 / 200W, Fa. Alpha-Calcit) mit einem Harzgemisch aus Epoxidharzpulver und Polyesterharzpulver mit einer Korngröße kleiner 100*µ*m (beispielsweise IGP-DURAmix 34, Fa. IGP Pulvertechnik AG) im Verhältnis ca. 6 Teile Aluminiumhydroxidpulver und 1 Teil Harzpulver gemischt. Der Mischvorgang wird in einem Betonmischer über die Dauer von ca. 2 bis 4 Stunden durchgeführt, um eine homogene Pulvermischung zu erzielen. Es wird ferner für die Körner-Grundschicht 16 Quarzsand bereitgestellt, wobei die Partikelgröße der Quarzkörner deutlich größer ist als die Partikelgröße sowohl der Aluminiumhydroxid-Partikel als auch der Harzpartikel.

Der Trägerkörper 12 wird mit Haftgrund in Form eines Klebemittelharzes an den Innenseiten der Seitenwände 14a, 14b und an der Oberseite des Bodens 13 versehen. Der Trägerkörper 12 wird dann mit der Körner-Grundschicht 16 beladen. Als nächstes wird auf die Körner-Grundschicht 16 die Pulvermischung aufgebracht, bis ungefähr an die Oberkante der Seitenwände 14a, 14b, Der mit Körner-Grundschicht 16 und Pulvermischung beladene Trägerkörper 12 wird dann in einen Ofen gebracht und anschließend unter Vakuum bei ca. 170°C gesintert oder in sonstiger Weise temperiert. Die Behandlungsdauer ist abhängig von der verwendeten Menge der Pulvermischung und der Körner-Grundschicht. Beim Temperieren werden die Harzpartikel erweicht, bleiben aber im Wesentlichen an Ort und Stelle. Das Bindemittel verflüssigt sich also nicht soweit, dass es zu einem Abfließen in Richtung der Körner-Grundschicht 16 kommt. Es werden Bindemittelbrücken gebildet, die benachbarte Aluminiumhydroxid-Partikel mit einander verbinden, wodurch ein ausgehärteter Formkörper 17 entsteht.

Der entstandene Verbundkörper 11 kann dann beispielsweise als Luft-Gleitlager verwendet werden. Dabei ist es lediglich notwendig, die nicht vom Trägerkörper 12 bedeckte Oberseite des Formkörpers 17 nachzubearbeiten, beispielsweise durch Schleifen und Polieren. Bei der Nachbearbeitung werden die Poren im Formkörper nicht geschlossen, sondern bleiben erhalten.

Der Formkörper 17 des Verbundkörpers hat ungefähr folgende technische Daten

| | |
|---|---|
| Farbton: | Perlweiss |
| Dichte: | 1,7 kg/dm³ |
| Shorehärte D: | 82 |
| Luftdurchlass(60mm unter Vakuum): | 52 |
| Luftdurchströmung (80mm x 300mm): | 2bar: 110 1/min, 4bar: 300 1/min |
| Wärmeformbeständigkeit: | 90°C |
| Wärmeausdehnungskoeffizient(DIN 53752): | 35 - 40 x 10 mm/K |

## Patentansprüche

1. Verfahren zur Herstellung von Verbundkörpern (11) aus dauerhaft miteinander verbundenem, steifem, fluidundurchlässigem Trägerkörper (12) und einem harten, porösen und mit einer Vielzahl von Kanälen zur Durchleitung von Fluiden versehenen Formkörper (17), mit folgenden Schritten:
- Bereitstellen von Salzpulver und/oder Metallpulver und Bindemittelpulver sowie eines steifen, fluidundurchlässigen Trägerkörpers (12),
- Mischen des Salzpulvers und/oder Metallpulvers und des Bindemittelpulvers zu einer Pulvermischung in einem Mengenverhältnis von Salzpulver und/oder Metallpulver zu Bindemittelpulver in der Pulvermischung im Bereich von 5 Teilen Salzpulver und/oder Metallpulver zu 1 Teil Bindemittelpulver bis 7 Teile Salzpulver und/oder Metallpulver zu 1 Teil Bindemittelpulver,
- Beladen des Trägerkörpers (12) mit der Pulvermischung,
- Temperieren des mit unverpresster Pulvermischung beladenen Trägerkörpers (12) in einem Ofen auf eine Temperatur bei der die Bindemittelpartikel erweichen aber nicht abfließen und Bindemittelbrücken entstehen, die benachbarte Salz- und/oder Metallpartikel miteinander verbinden und anschließend das Bindemittel aushärtet, wodurch ein Verbundkörper (11) aus Trägerkörper (12) und Formkörper (17) entsteht.

2. Verfahren nach Anspruch 1, **dadurch gekennzeichnet, dass** es sich bei dem Salzpulver um ein anorganisches Salzpulver, insbesondere Mineralsalzpulver handelt.

3. Verfahren nach Anspruch 2, **dadurch gekennzeichnet, dass** es sich bei dem Salzpulver um Metallsalzpulver, vorzugsweise Metallaquoxidpulver, insbesondere Metallhydroxidpulver handelt.

4. Verfahren nach Anspruch 2 oder 3, **dadurch gekennzeichnet, dass** als Metallsalzpulver Aluminiumsalzpulver, Magnesiumsalzpulver und/oder Siliciumsalzpulver verwendet wird.

5. Verfahren nach einem der Ansprüche 2 bis 4, **dadurch gekennzeichnet, dass** als Metallsalzpulver Aluminiumhydroxidpulver verwendet wird.

6. Verfahren nach einem der vorhergehenden Ansprüche, **dadurch gekennzeichnet, dass** als Bindemittelpulver ein in Pulverform vorliegendes Harz verwendet wird, vorzugsweise eine Mehrkomponenten-Harzpulver, wobei als einer der Komponenten Epoxidharzpulver vorgesehen ist, wobei insbesondere ein Harzgemische aus Epoxidharzpulver und Polyesterharzpulver verwendet wird.

7. Verfahren nach einem der vorhergehenden Ansprüche, **dadurch gekennzeichnet, dass** das Mengenverhältnis 6 Teile Salzpulver und/oder Metallpulver zu 1 Teil Bindemittelpulver beträgt.

8. Verfahren nach einem der vorhergehenden Ansprüche, **dadurch gekennzeichnet, dass** das Temperieren unter Vakuum stattfindet.

9. Verfahren nach einem der vorhergehenden Ansprüche, **dadurch gekennzeichnet, dass** vor dem Beladen des Trägerkörpers (12) mit Pulvermischung auf wenigstens eine Trägerkörperoberfläche (13, 14a, 14b), die mit der Oberfläche in Kontakt kommt, Haftmittel zur stoffschlüssigen Verbindung zwischen dem Trägerkörper (12) und dem nach dem Sintern entstandenen Formkörper (17) aufgetragen werden.

10. Verfahren nach einem der vorhergehenden Ansprüche, **dadurch gekennzeichnet, dass** der Trägerkörper (12) vor dem Beladen mit der Pulvermischung mit wenigstens einer gegenüber der Pulvermischung grobporöseren Körner-Grundschicht (16) beladen wird, wobei vorzugsweise die mittlere Korngröße der Körner in der Körner-Grundschicht (16) größer ist als die mittlere Partikelgröße der Pulverpartikel in der Pulvermischung.

11. Verfahren nach Anspruch 10, **dadurch gekennzeichnet, dass** als Körner-Grundschicht (16) Sand, insbesondere Quarzsand, verwendet wird.

12. Verbundkörper, insbesondere hergestellt nach dem Verfahren gemäß einem der Ansprüche 1 bis 11, mit einem steifen, fluidundurchlässigen Trägerkörper (12), an dem ein Formkörper (17) angeordnet ist, der mit dem Trägerkörper (12) über Haftmittel dauerhaft verbunden ist, wobei der Formkörper (17) ein mikroporöses Strukturskelett aus Salz- und/oder Metallpartikeln aufweist, die über Bindemittelbrücken aus Bindemittel aneinander haften, wobei zwischen den Salzpartikeln und/oder Metallpartikeln eine Vielzahl von Kanälen ausgebildet sind, die über das gesamte Strukturskelett verteilt angeordnet sind und an einer Formkörperoberfläche des Formkörpers in Gestalt von unregelmäßig geformten Öffnungen über die gesamte Formkörperoberfläche verteilt ausmünden, wobei die Haftmittel von widerhakenartigen Verankerungselementen (20) gebildet sind, die am Trägerkörper (12) angeordnet sind und sich in das Material des Formkörpers (17) einkrallen.

13. Verwendung des Verbundkörpers nach Anspruch 12 als Luft-Gleitlager.

14. Verwendung des Verbundkörpers nach Anspruch 12 als Schüttgutfördereinrichtung zur Förderung pulverförmigen Schüttguts.

15. Verwendung des Verbundkörpers nach Anspruch 12 als Begasungs- und/oder Befeuchtungseinrichtung.

16. Verwendung des Verbundkörpers nach Anspruch 12 als Tiefziehform.

## Claims

1. Method for the production of composite bodies (11) from rigid, fluid-impermeable support body (12) and a hard, porous moulded body (17) provided with a multiplicity of passages for the through passage of fluids permanently connected to one another, with the following steps:
- provision of salt powder and/or metal powder and binding agent powder together with a rigid, fluid-impermeable support body (12)
- mixing of the salt powder and/or metal powder and binding agent powder to a powder mixture with a quantity ratio of salt powder and/or metal powder to binding agent powder in the powder mixture in the range of 5 parts salt powder and/or metal powder to 1 part binding agent powder up to 7 parts salt powder and/or metal powder to 1 part binding agent powder
- charging of the support body (12) with the powder mixture
- tempering of the support body (12) charged with uncompressed powder mixture in an oven to a temperature at which the binding agent particles soften but do not flow away, and form binding agent bridges which join adjacent salt and/or metal particles to one another and subsequently the binding agent cures, resulting in the formation of a composite body (11) of support body (12) and moulded body (17).

2. Method according to claim 1, **characterised in that** the salt powder involves an inorganic salt powder, in particular mineral salt powder .

3. Method according to claim 2, **characterised in that** the salt powder involves metal salt powder, preferably metal aquoxide powder, in particular metal hydroxide powder.

4. Method according to claim 2 or 3, **characterised in that** aluminium salt powder, magnesium salt powder and/or silicon salt powder is or are used as metal salt powder.

5. Method according to any of claims 2 to 4, **characterised in that** aluminium hydroxide powder is used as metal salt powder.

6. Method according to any of the preceding claims, **characterised in that** as binding agent powder a resin existing in powder form is used, preferably a multi-component resin powder, wherein as one of the components epoxy resin powder is provided, wherein in particular a resin mixture of epoxy resin powder and polyester resin powder is used.

7. Method according to any of the preceding claims, **characterised in that** the quantity ratio is 6 parts of salt powder and/or metal powder to 1 part of binding agent powder.

8. Method according to any of the preceding claims, **characterised in that** the tempering takes place under vacuum.

9. Method according to any of the preceding claims **characterised in that**, before charging the support body (12) with powder mixture on at least one support body surface (13, 14a, 14b) which comes into contact with the surface, bonding agent for material bonding is applied between the support body (12) and the moulded body (17) produced after sintering.

10. Method according to any of the preceding claims, **characterised in that** the support body (12), before charging with the powder mixture, is charged with at least one grain base layer (16) which is coarser-pored than the powder mixture, wherein preferably the average size of the grains in the grain base layer (16) is greater than the average particle size of the powder particles in the powder mixture.

11. Method according to claim 10, **characterised in that** sand, in particular quartz sand, is used for the grain base layer (16).

12. Composite body, in particular produced by the method according to any of claims 1 to 11, with a rigid, fluid-impermeable support body (12), on which is mounted a moulded body (17) which is permanently joined to the support body (12) by bonding agent, wherein the moulded body (17) has a microporous structural skeleton of salt and/or metal particles which adhere to one another over binding agent bridges of binding agent wherein, between the salt particles and/or metal particles a multiplicity of passages is formed, which are distributed over the whole structural skeleton and emerge at a moulded body surface of the moulded body in the form of irregularly shaped openings distributed over the whole moulded body surface, wherein the bonding agents are formed by barb-like anchoring elements (20) which are arranged on the support body (12) and dig into the the material of the moulded body (17).

13. Use of the moulded body according to claim 12 as an air bearing.

14. Use of the moulded body according to claim 12 as a bulk material conveyor for the conveyance of powdery bulk material.

15. Use of the moulded body according to claim 12 as gassing device and/or humidifier.

16. Use of the moulded body according to claim 12 as thermoforming mould.

## Revendications

1. Procédé de fabrication de corps composites (11) d'un corps support (12) imperméable aux fluides, rigide, relié durablement à un corps moulé (17) dur, poreux et doté d'une pluralité de canaux pour le transit de fluides, avec les étapes suivantes :
- mise à disposition de poudre de sel et/ou poudre de métal et de poudre de liant ainsi que d'un corps support rigide imperméable aux fluides (12),
- mélange de la poudre de sel et/ou poudre de métal et de la poudre de liant en un mélange de poudre dans un rapport quantitatif de poudre de sel et/ou poudre de métal par rapport à la poudre de liant dans le mélange de poudre dans la plage de 5 parts de poudre de sel et/ou poudre de métal pour 1 part de poudre de liant à 7 parts de poudre de sel et/ou poudre de métal pour 1 part de poudre de liant,
- chargement du corps support (12) avec le mélange de poudre,
- mise à température du corps support (12) chargé de mélange de poudre non comprimé dans un four à une température à laquelle les particules de liant ramollissent mais ne s'évacuent pas et des ponts de liant se forment, qui relient l'une à l'autre les particules de sel et/ou de métal adjacentes, et ensuite le liant durcit, ce par quoi un corps composite (11) formé d'un corps support (12) et d'un corps moulé (17) est généré.

2. Procédé selon la revendication 1, **caractérisé en ce que** la poudre de sel est une poudre de sel anorganique, en particulier une poudre de sel minéral.

3. Procédé selon la revendication 2, **caractérisé en ce que** la poudre de sel est de la poudre de sel métallique, de préférence de la poudre d'aquoxyde de métal, en particulier de la poudre d'hydroxyde métallique.

4. Procédé selon la revendication 2 ou 3, **caractérisé en ce que** de la poudre de sel d'aluminium, de la poudre de sel de magnésium et/ou de la poudre de sel de silicium est utilisée en tant que poudre de sel métallique.

5. Procédé selon l'une quelconque des revendications 2 à 4, **caractérisé en ce que** de la poudre d'hydroxyde d'aluminium est utilisée en tant que poudre de sel métallique.

6. Procédé selon l'une quelconque des revendications précédentes, **caractérisé en ce qu'**une résine présente sous forme de poudre est utilisée en tant que poudre de liant, de préférence une poudre de résine à plusieurs composants, dans lequel de la poudre de résine époxy est prévue en tant qu'un des composants, dans lequel en particulier un mélange de résine de poudre de résine époxy et de poudre de résine polyester est utilisé.

7. Procédé selon l'une quelconque des revendications précédentes, **caractérisé en ce que** le rapport quantitatif est de 6 parts de poudre de sel et/ou poudre de métal pour 1 part de poudre de liant.

8. Procédé selon l'une quelconque des revendications précédentes, **caractérisé en ce que** la mise à température a lieu sous vide.

9. Procédé selon l'une quelconque des revendications précédentes, **caractérisé en ce qu'**avant le chargement du corps support (12) avec le mélange de poudre sur au moins une surface du corps support (13, 14a, 14b), qui entre en contact avec la surface, des adhésifs pour la liaison par matière entre le corps support (12) et le corps moulé (17) généré après le frittage sont appliqués.

10. Procédé selon l'une quelconque des revendications précédentes, **caractérisé en ce que** le corps support (12) est chargé avant le chargement du mélange de poudre avec au moins une couche de base de grain (16) à grands pores par rapport au mélange de poudre, dans lequel de préférence la taille de grain moyenne des grains dans la couche de base de grain (16) est plus grande que la taille de particule moyenne des particules de poudre dans le mélange de poudre.

11. Procédé selon la revendication 10, **caractérisé en ce que** du sable, en particulier du sable de quartz, est utilisé en tant que couche de base de grain (16).

12. Corps composite, fabriqué en particulier selon le procédé selon l'une quelconque des revendications 1 à 11, avec un corps support rigide imperméable aux fluides (12), au niveau duquel un corps moulé (17) est agencé, qui est relié durablement au corps support (12) par le biais d'adhésifs, dans lequel le corps moulé (17) présente un squelette de structure microporeux en particules de sel et/ou métal, qui adhèrent l'une à l'autre par le biais de ponts de liant en liant, dans lequel une pluralité de canaux sont réalisés entre les particules de sel et/ou particules de métal, qui sont agencés répartis sur tout le squelette de structure et débouchent répartis sur une surface de corps moulé du corps moulé sous la forme d'ouvertures formées de manière irrégulière sur la toute la surface de corps moulé, dans lequel les adhésifs sont formés par des éléments d'ancrage de type barbillon (20), qui sont agencés sur le corps support (12) et s'accrochent dans le matériau du corps moulé (17).

13. Utilisation du corps composite selon la revendication 12 en tant que palier lisse à air.

14. Utilisation du corps composite selon la revendication 12 en tant que dispositif de transport de produit en vrac pour le transport de produit en vrac pulvérulent.

15. Utilisation du corps composite selon la revendication 12 en tant que dispositif de gazage et/ou d'humification.

16. Utilisation du corps composite selon la revendication 12 en tant que moule d'emboutissage.
